# EUROPÄISCHE PATENTSCHRIFT

(11) **EP 1 619 818 B1**
(45) Veröffentlichungstag und Bekanntmachung des Hinweises auf die Patenterteilung: **10.03.2010**
(21) Anmeldenummer: 05016013.4
(22) Anmeldetag: 22.07.2005
(51) Int. Cl.: H04L 7/00

(54) **Vorrichtung und Verfahren zum Ableiten eines Referenztakts aus einem Referenztakt-Übertragungssignal**
Device and method for generating a reference clock signal from a reference clock transmission signal
Appareil et procédé pour générer une horloge de référence à partir d'une horloge de référence transmise

(30) Priorität: 22.07.2004 DE 102004035532
(43) Veröffentlichungstag der Anmeldung: 25.01.2006
(73) Patentinhaber: Fraunhofer-Gesellschaft zur Förderung der angewandten Forschung e.V., 80686 München (DE)
(72) Erfinder: Couronné, Sylvie, 91052 Erlangen (DE); Retkowski, Reiner, 91052 Erlangen (DE); Bernhard, Josef, 92507 Nabburg (DE); Von der Grün, Thomas, 91077 Kleinsendelbach (DE)
(74) Vertreter: Zinkler, Franz

(56) Entgegenhaltungen:
- WO-A-98/35455
- DE-A1- 19 748 913
- US-A1- 2001 055 349
- US-B1- 6 456 823

## Beschreibung

Die vorliegende Erfindung bezieht sich im Allgemeinen auf eine Vorrichtung und ein Verfahren zum Erzeugen eines Referenztakt-Übertragungssignals und Ableiten eines Referenztaktsignals aus demselben, im Speziellen auf eine Vorrichtung und ein Verfahren, die zur Generierung, drahtlosen Verteilung und Rückgewinnung eines hochgenauen und jitterarmen Referenztaktsignals geeignet sind.

Die Verteilung und insbesondere die drahtlose Verteilung von jitterarmen Systemtaktsignalen kann überall dort zum Einsatz kommen, wo Elektronikeinheiten wie z. B. Sender und Empfänger zeitlich genau zueinander synchronisiert sein müssen. Beispielsweise ist in lokalen Kommunikations- und Ortungssystemen, wo eine Steuereinheit (oder Zentrale) und Basisstationen räumlich getrennt und unter Umständen drahtgebunden schwer vernetzbar sind, eine drahtlose Verteilung des Systemtaktes notwendig. Viele andere lokale Systeme werden ebenso drahtlos vernetzt, um die Infrastruktur flexibel und erweiterbar zu halten. In manchen Applikationen sind Kabel sogar überhaupt nicht einsetzbar, beispielsweise wenn zu steuernde Teile rotieren. Diese Systeme müssen drahtlos synchronisiert werden. Weitere Anwendungsbeispiele, bei denen Systemtaktsignale verteilt werden müssen, sind Messwerterfassungs-, Diagnostik- und Datensysteme, die während des Betriebs überwacht bzw. gesteuert werden. Bei diesen Systemen müssen Zeit und Ereignis an den unterschiedlichen Orten exakt und synchron zur Verfügung stehen.

Bei manchen Systemen liegen die Genauigkeitsanforderung an die Zeitauflösung im Bereich von wenigen Nanosekunden. Dies ist derzeit nur mit drahtgebundenen Lösungen erzielbar. Im Falle derart strenger Anforderungen hat der Jitter im System einen wichtigen Einfluss auf die Genauigkeit der TaktRückgewinnung und muss absolut minimal gehalten werden. Eben dies erschwert den Einsatz von drahtlosen Systemen, da die Übertragungsstrecke starken Störungen und Änderungen der Übertragungscharakteristik ausgesetzt sein kann.

Weiterhin ist es erforderlich, dass ein System zur Verteilung eines Systemtaktsignals sowohl innerhalb von Gebäuden als auch außerhalb verwendet werden kann.

Im Folgenden werden verschiedene Systeme zur Verteilung eines Referenztakts gemäß dem Stand der Technik beschrieben. Zu unterscheiden sind Systeme, die einen Pilotton, das heißt ein Ton-Trägersignal, verwenden und solche, die ein Pilotsignal, das heißt ein Signal, bei dem Daten zum Zweck der Synchronisation auf einen Träger aufmoduliert sind, verwenden. Bei Systemen, die einen Pilotton verwenden, kann der Sender sehr einfach aufgebaut werden, und solche Systeme sind in einem weiten Frequenzband einsetzbar. Allerdings kann das Ton-Trägersignal, das die gesamte Taktinformation enthält, sehr leicht durch Störungen auf der drahtlosen Übertragungsstrecke gestört werden. Ferner können bei solchen Systemen die Empfänger nicht einfach realisiert werden. Es können entweder Geradeausempfänger oder Heterodynempfänger eingesetzt werden. Erstere sind z. B. durch die hohen Linearitätsanforderungen sehr aufwendig, bei zweiteren wird durch die Mischerstufe die Frequenzstabilität in den Empfänger selbst verlagert. Entsprechend wird der empfangene Referenztakt durch den Lokaloszillator des Empfängers mitbestimmt, und es muss im Empfänger ein sehr hochwertiger frequenzgenauer und frequenzstabiler Referenzoszillator eingesetzt werden, was hohe Systemkosten mit sich bringt. Wird anstelle des Pilottons ein moduliertes Pilotsignal verwendet, so erhöht dies den Aufwand in jedem Empfänger, da Einrichtungen zur Demodulation und eventuell zur Korrelation erforderlich sind. Jedoch reagieren Systeme, die ein Pilotsignal verwenden, meist weniger empfindlich auf Störungen auf dem Übertragungskanal.

Systeme zur Übertragung eines Referenztakts und zur Synchronisation mehrerer ortsverteilter Komponenten können ferner danach klassifiziert werden, ob ein globaler oder ein lokaler Referenztakt verwendet wird und ob die Übertragung drahtlos oder drahtgebunden erfolgt. Gemäß dem Stand der Technik werden üblicherweise drei Klassen von Systemen eingesetzt. Bei einer ersten Gruppe von Systemen wird der Referenztakt aus einem oder mehreren global als Funksignal abgestrahlten Pilottönen bzw. Pilotsignalen abgeleitet. Als globale Abdeckung wird hier die Bereitstellung des Referenztakts in einem räumlich ausgedehnten Gebiet typischerweise durch staatliche oder halbstaatliche Organisationen, zumindest aber in Absprache mit einer Regulierungsbehörde, betrachtet. Aufgrund der beschränkten Leistung bei der Ausstrahlung des globalen Referenzsignals sowie aufgrund der großen räumlichen Entfernung zum Referenzsignal-Sender sind die Pilottöne bzw. Pilotsignale häufig innerhalb von Gebäuden nur schlecht oder überhaupt nicht zu empfangen. Manchmal müssen sie mit einem hohen Aufwand an Verstärkung und Filterung im Empfänger detektiert werden.

Bei einer weiteren Gruppe von Systemen wird das Referenztaktsignal lokal erzeugt und dann über ein Kabel oder über ein drahtgebundenes Netzwerk (z. B. Ethernet) verteilt. Der Nachteil bei solchen Systemen liegt in dem hohen Investitions- und Installations-Aufwand, den die zwingend notwendige Verkabelung mit sich bringt.

Bei einer weiteren Gruppe von Systemen wird der Referenztakt lokal erzeugt und dann über ein lokales Funknetzwerk (beispielsweise WLAN oder ein Mobilkommunikationsnetz) verteilt. Die Verteilung von Takt- und Synchronisation erfolgen hierbei über eine Datenverbindung. Dies kann durch einen Synchronisationskanal, einen periodischer Zeitstempel oder eine Pilotsequenz realisiert sein.

Im Folgenden werden bestehende Systeme zur Taktverteilung näher beschrieben. Zuerst werden verschiedene Systeme, die einen globalen, das heißt in einem weiten räumlichen Gebiet empfangbaren, Systemtakt liefern bezüglich ihrer Genauigkeit und des nötigen schaltungstechnischen Aufwands zur Taktregenerierung beschrieben. Das Signal des TDF/DCF77-Systems ist in Deutschland und in fast ganz Europa zu empfangen. Die Zeitauflösung liegt im Bereich von 2 bis 50 ms, abhängig von der Empfängerstruktur. Die Synchronisation ist zu ungenau für viele Anwendungen. Es existieren passive Empfänger, die das Funksignal nur empfangen, und aktive Empfänger, die das Signal empfangen und aufbereiten.

Bei Verwendung des Global Positioning System (GPS) können mit einem GPS-Empfänger weltweit die Zeitsignale der GPS-Satelliten mit einer Zeitauflösung im Bereich von bestenfalls etwa ±1µs ausgewertet werden. Die GPS-Signale sind nicht überall zu empfangen. Die Empfängerantenne muss direkte Sicht zum Himmel haben und eine ausreichende Anzahl von Satellitensignalen empfangen, um die GPS-Weltzeit auszuwerten. Dadurch ist das GPS-System für lokale Systeme in einem Gebäude oder in einer Halle nicht geeignet. Außerdem wird die oben genannte Zeitauflösung nur erreicht, wenn im Empfänger ein sehr stabiler Oszillator zur Rückgewinnung des Synchronisationssignals eingesetzt wird. Ein solcher ist oftmals sehr teuer und unhandlich.

Bei dem Galileo-Navigationssystem wird ein Pilotkanal (ein Pilotträger mit modulierten Daten) verwendet, um ein schnelles Aussynchronisieren zu ermöglichen. Damit können sich die Empfangsgeräte auch bei noch niedrigeren Signalempfangsleistungen als beispielsweise derzeit bei GPS aussynchronisieren. Diese Eigenschaft ist aber von der Güte des Oszillators im Empfänger abhängig, da der Pilotton mit dem intern erzeugten Signal verglichen wird. Sehr gute Oszillatoren sind aber oft teuer und unhandlich, was den Einsatz des Systems beschränkt.

Weiterhin existieren Lösungen, bei denen ein lokal erzeugter Referenztakt über eine Leitung verteilt wird. Zu unterscheiden sind hierbei Systeme, bei denen für die Übertragung des Referenztakts ein eigenes Koaxialkabel bzw. ein eigener Lichtwellenleiter verwendet wird und Systeme, bei denen der Referenztakt auf einem auch bzw. hauptsächlich zur Datenübertragung genutzten Kabel übertragen wird. In Systemen mit eigener Taktleitung ist eine sehr gute Zeitauflösung erzielbar, aber es entstehen sehr hohe Kosten aufgrund des hohen Installationsaufwands. Bei anderen Systemen wird ein lokal erzeugter Referenztakt über ein drahtgebundenes Datennetzwerk (z. B. Ethernet) verteilt wird. Alle Komponenten, die an das Netzwerk angeschlossen sind, können mit einem zentralen Zeitserver kommunizieren. Die Laufzeit im Netz zwischen Station und Server wird gemessen und der Zeitstempel wird entsprechend kalibriert. Unterschiedliche Programme und Netzwerkprotokolle unterstützen dieses Verfahren, wie z. B. das Network-Time-Protocol (NTP). Die Genauigkeit bei der Synchronisation der vernetzten Stationen liegt im ms-Bereich, was für Anwendungen mit geringen zeitlichen Anforderungen ausreicht. Die Installationskosten sind gering, falls ein bestehendes Datennetzwerk weiterverwendet werden kann. Allerdings ist nicht in jedem Fall die Verwendung eines drahtgebundenen Datennetzwerks möglich bzw. wünschenswert.

Bei drahtlosen Anwendungen ist es möglich, zusätzlich zu den Nutzdaten bzw. zu der zu übertragenden Sprachinformation einen Referenztakt bzw. ein Synchronisationssignal zu übertragen. Am Verbreitesten sind gegenwärtig Wireless-LAN (WLAN) sowie DECT und Mobilfunknetzwerke. WLAN bietet eine Funktion zur Zeitsynchronisation, bei der mit Hilfe eines definierten Haupttaktgebers, der periodische Zeitstempel sendet, die Stationen im Netz synchronisiert werden. In einer ad-hoc Netzwerkkonfiguration bereiten sich alle Stationen darauf vor, diese Aufgabe zu übernehmen. Wird ein Zeitstempel von einer anderen Station vorher dekodiert, wird deren Zählerstand übernommen, wenn er einen höheren Wert hat. Die schnellste Uhr setzt sich durch. In WLAN-Netzwerken kann innerhalb einer Zelle eine Genauigkeit von ca. 100 ns erreicht werden. In Mobilfunknetzwerken gibt es zur Erzeugung eines Referenztaktes einen Synchronisationskanal. Durch komplexe digitale Verarbeitung wird eine Zeitauflösung im Bereich von 10 bis 100 ms erreicht, was für zeitkritische Anwendungen nicht ausreichend ist.

Ferner zeigt die DE 197 48 913 A1 ein LMDS-System mit einer Basisstation, Teilnehmereinheiten und Teilnehmermodems. Die Teilnehmereinheiten koppeln modulierte Signale zwischen den Basisstationen und den Teilnehmermodems und setzen dieselben frequenzmäßig um. Die Frequenzumsetzung erfordert einen Zwischensendeoszillator und einen Lokaloszillator. Der Zwischensendeoszillator kann jedoch ferner verwendet werden, um ein Lokaloszillatorsignal in jeder Teilnehmereinheit nach unten zu einer niedrigeren Frequenz umzusetzen, welche es ermöglicht, daß ein kostengünstiger PLL-Chip verwendet wird, um den Lokaloszillator in jeder Teilnehmereinheit mit einer Referenzquelle phasenzuverriegeln. Ein Pilotton kann in die modulierten Signale eingekoppelt werden, die von der Basisstation zu den Teilnehmereinheiten übertragen werden. Der Pilotton kann in den Lokaloszillator-Phasenregelkreis in jeder Teilnehmereinheit aufgenommen werden, um die Auswirkungen der Signalübertragung auf das Phasenrauschen der modulierten Signale zu reduzieren. Außerdem können Dualpilottöne in das modulierte Signal eingekoppelt werden, die von der Basisstation zu den Teilnehmereinheiten übertragen werden. Die Dualpilottöne können verwendet werden, um ein Referenzsignal in jeder Teilnehmereinheit zu erzeugen.

Zusammenfassend kann festgehalten werden, dass die Erzeugung und Übertragung eines Referenztaktsignals nach wie vor große technische Schwierigkeiten und wirtschaftliche Kompromisse mit sich bringt. Der Empfang eines globalen Referenztaktsignals ist nicht immer einfach, da die Stärke des empfangenen Signals typischerweise sehr gering ist. Ferner erfordern insbesondere satellitenbasierte Systeme die Verwendung eines sehr genauen lokalen Oszillators, um einen präzisen Referenztakt erzeugen zu können. Dies verursacht hohe Kosten. Die drahtgebundene Übertragung eines Referenztaktes ermöglichst eine sehr hohe Präzision, allerdings nur dann, wenn auf einer Übertragungsleitung ausschließlich der Referenztakt übertragen wird. Ein solches Vorgehen bringt sehr hohe Installationskosten mit sich. Bei der Verwendung eines drahtgebundenen Datennetzwerks zur Erzeugung eines Referenztaktes ist nur eine mäßige Genauigkeit erzielbar. Bei drahtlosen lokalen Netzwerken kann eine Genauigkeit von ca. 100 ns innerhalb einer Zelle erreicht werden. Dies ist für zahlreiche Anwendungen ausreichend, in manchen Fällen ist jedoch eine höhere Genauigkeit erforderlich.

Die DE 197 48 913 A1 beschreibt ein LMDS-System mit einer Basisstation, Teilnehmereinheiten und Teilnehmermodems. Die Teilnehmereinheiten koppeln modulierte Signale zwischen den Basisstationen und dem Teilnehmermodems und setzen dieselben frequenzmäßig um. Die Frequenzumsetzung erfolgt durch einen Zwischensendeoszillator und einen Lokaloszillator. Der Zwischensendeoszillator kann jedoch ferner verwendet werden, um ein Lokaloszillatorsignal in jeder Teilnehmereinheit nach unten zu einer niedrigeren Frequenz umzusetzen, welches es ermöglicht, dass ein kostengünstiger PLL-Chip verwendet wird, um den Lokaloszillator in jeder Teilnehmereinheit mit einer Referenzquelle phasen-mäßig zu verriegeln. Ein Pilotton wird in die modulierten Signale eingekoppelt, die von der Basisstation zu den Teilnehmereinheiten übertragen werden. Der Pilotton wird in den Lokaloszillator-Phasenregelkreis in jeder Teilnehmereinheit aufgenommen, um die Auswirkungen der Signalübertragung auf das Phasenrauschen der modulierten Signale zu reduzieren. Außerdem beschreibt die genannte Schrift, Dualpilottöne in das modulierte Signal einzukoppeln, das von der Basisstation zu den Teilnehmereinheiten übertragen wird. Die Dualpilottöne werden verwendet, um ein Referenzsignal in einer Teilnehmereinheit zu erzeugen.

Die US 6,456,823 B1 beschreibt ein System und ein Verfahren zum Wiederherstellen eines Pilottons in einem lokalen Mehrpunkt-Verteilungs-System-Signal. Ein Zwischenfrequenzsignal wird durch einen Differenzfrequenzgenerator empfangen. Das Zwischenfrequenzsignal umfasst eine Pilottonfrequenz. Ein Bandpassfilter entfernt Frequenzen, die die Pilottonfrequenz umgeben. Eine Phasen-Rast-Schleife erzeugt ein Pilottonsignal aus der Pilottonfrequenz. Ein Teiler teilt die Frequenz des Pilottonsignals durch eine vorgegebene Zahl. Ein zweiter Phasendetektor bestimmt eine Frequenzdifferenz zwischen dem Pilottonsignal und einem stabilen Frequenzsignal, das durch einen stabilen Frequenzoszillator erzeugt wird. Eine Steuerspannung für einen spannungsgesteuerten dielektrischen Resonator-Oszillator wird basierend auf der Differenzfrequenz eingestellt. Ein Systemfrequenzsignal wird zu einem Zwischenfrequenzsignal herunterkonvertiert, wobei das Differenzfrequenzsignal verwendet wird.

Ausgehend von diesem Stand der Technik liegt der vorliegenden Erfindung die Aufgabe zugrunde, Vorrichtungen und ein Verfahren zu schaffen, die geeignet sind, um einen regenerierten Referenztakt aus einem Refernztakt-Übertragungssignal abzuleiten, um eine Rückgewinnung eines Referenztaktes zur Synchronisation verteilter Komponenten zu ermöglichen.

Diese Aufgabe wird durch eine Vorrichtung gemäß Anspruch 1, ein Verfahren gemäß Anspruch 6 sowie eine Basisstation gemäß Anspruch 7 gelöst.

Die vorliegende Erfindung schafft eine Vorrichtung zur Erzeugung eines Referenztakt-Übertragungssignals, aus dem ein regenerierter Referenztakt ableitbar ist, mit folgenden Merkmalen:
einer Einrichtung zum Bereitstellen eines ersten Signals mit einer ersten Frequenz;
einer Einrichtung zum Bereitstellen eines zweiten Signals mit einer zweiten Frequenz, wobei eine Differenz zwischen der ersten und der zweiten Frequenz eine vorbestimmte Beziehung zu dem Referenztakt aufweist; und
einer Einrichtung zum Kombinieren des ersten und zweiten Signals zum Erzeugen des Referenztakt-Übertragungssignals.

Ferner schafft die vorliegende Erfindung eine Vorrichtung zum Ableiten eines regenerierten Referenztaktes aus einem Referenztakt-Übertragungssignal, das ein erstes Signal mit einer ersten Frequenz und ein zweites Signal mit einer zweiten Frequenz umfasst, wobei eine Differenz zwischen der ersten Frequenz und der zweiten Frequenz eine vorbestimmte Beziehung zu der Frequenz des Referenztakts aufweist, mit folgenden Merkmalen:
einer Einrichtung zum Erzeugen eines Hilfssignals, dessen Frequenz gleich der Differenz zwischen der ersten Frequenz und der zweiten Frequenz des Referenztakt-Übertragungssignals ist; und
einer Vorrichtung zum Ableiten des Referenztakts von dem Hilfssignal.

Weiterhin schafft die vorliegende Erfindung ein Verfahren zur Erzeugung eines Referenztakt-Übertragungssignals sowie ein Verfahren zum Ableiten eines regenerierten Referenztaktes aus einem Referenztaktübertragungssignal.

Die vorliegende Erfindung schafft somit ein System zur Übertragung eines Referenztakts, bei dem aufgrund eines Referenztaktes ein Referenztakt-Übertragungssignal erzeugt wird. Dieses kann dann entweder über ein Kabel oder drahtlos zu einem Empfänger übertragen werden. Auf der Empfängerseite kann aus dem Referenztakt-Übertragungssignal wiederum ein regeneriertes Referenztakt-Signal erzeugt werden.

Die vorliegende Erfindung beruht auf der Erkenntnis, dass in Systemen, bei denen eine Frequenzumsetzung erfolgt, die Regenerierung der ursprünglichen absoluten Frequenz auf der Empfängerseite nur mit sehr hohem Aufwand möglich ist, während Frequenzdifferenzen bei der empfängerseitigen Frequenzumsetzung erhalten bleiben und mit geringem Aufwand ausgewertet werden können. Insofern liegt der Kerngedanke der Erfindung in dem Konzept, den Referenztakt durch zwei von dem Referenztakt abgeleitete Pilottöne zu übertragen, während gemäß dem Stand der Technik üblicherweise nur ein Pilotton verwendet wird. Die Verwendung von erfindungsgemäßen Vorrichtungen zur Übertragung eines Referenztakts bringt daher den Vorteil, dass die Genauigkeitsanforderungen an die zur Frequenzumsetzung verwendeten Einrichtungen im Vergleich zu dem Stand der Technik deutlich entspannt sind. Insbesondere beeinflusst die Genauigkeit und Stabilität des empfängerseitigen Lokaloszillators nicht das empfangene Referenztaktsignal, so dass kostengünstige Oszillatoren verwendet werden können.

Weiterhin beruht die vorliegende Erfindung auf der Erkenntnis, dass zwei Signale mit nahe beieinander liegenden Frequenzen bei der drahtlosen Übertragung typischerweise ähnlichen Signalverzerrungen und Störungen unterliegen. Bei der erfindungsgemäßen Vorrichtung werden die beiden übertragenen Signale so kombiniert, dass sich Störeinflüsse, die auf der Übertragungsstrecke entstehen, gegenseitig weitgehend aufheben. Damit ist die Übertragung von Referenztaktsignalen mit Hilfe der vorliegenden erfindungsgemäßen Vorrichtungen bzw. Verfahren weniger anfällig gegen Störungen als solche Vorrichtungen bzw. Verfahren, die nur einen Pilotton verwenden.

Daneben ist es vorteilhaft, dass mit Hilfe der erfindungsgemäßen Vorrichtungen jedes beliebige Frequenzband innerhalb der gesetzlich freigegebenen Frequenzbereiche für die Verteilung der Pilottöne und damit des Referenztaktsignals benützt werden kann. Die einzigen Einschränkungen sind hierbei die zur Verfügung stehende Bandbreite und die erlaubten Sendezyklen. In einem Ausführungsbeispiel wird zur Übertragung des Referenztakt-Übertragungsignals das ISM-Band bei 2.4 GHz verwendet.

Bei einem bevorzugten Ausführungsbeispiel umfasst die Vorrichtung zur Erzeugung des Referenztakt-Übertragungssignals ein jitterarmen Oszillator zum Erzeugen des Referenztaktes. Dies bringt den Vorteil, dass auch das erste Signal und das zweite Signal des Referenztakt-Übertragungssignals einen geringen Jitter aufweisen.

Bei einem weiteren bevorzugten Ausführungsbeispiel werden das erste Signal und das zweite Signal des Referenztakt-übertragungssignals aus dem Referenztaktsignal mit Hilfe eines spannungsgesteuerten Oszillators in Verbindung mit einer Phasenregelschleife erzeugt und dann mit Hilfe eines Bandpassfilters gefiltert. Eine solche Anordnung bringt den Vorteil, dass mit vergleichsweise geringem Aufwand aus dem Referenztaktsignal zwei Signale erzeugt werden können, die eine feste Phasenbeziehung zu dem Referenztaktsignal haben, und deren Frequenzdifferenz wohldefiniert ist. Die Frequenzdifferenz zwischen dem ersten Signal des Referenztakt-Übertragungssignals und dem zweiten Signal des Referenztakt-Übertragungssignals ist dabei typischerweise ein Vielfaches der Frequenz des Referenztaktsignals. Es ist aber auch möglich, dass die Frequenzdifferenz ein Bruchteil der Frequenz des Referenztaktsignals ist. Die anschließende Filterung erhöht die spektrale Reinheit des Referenztakt-Übertragungssignals und vermeidet so Störungen. Außerdem können bei Verwendung von Bandpassfiltern die Anforderungen an die Oszillatoren und die Phasenregelschleife verringert werden.

Gemäß einem weiteren bevorzugten Ausführungsbeispiel wird das Referenztakt-Übertragungssignal, das sich durch Zusammenführen eines ersten Signals mit einer ersten Frequenz und eines zweiten Signals mit einer zweiten Frequenz ergibt, in eine andere Frequenzlage umgesetzt. Dies ermöglicht eine drahtlose Übertragung des Referenztakt-Übertragungssignals in jedem beliebigen gesetzlich zugelassenen Frequenzbereich bzw. eine drahtgebundene Übertragung in einem beliebigen Frequenzbereich. Die Einrichtung zur Frequenzumsetzung umfasst dabei in einem Ausführungsbeispiel einen Mischer, einen phasengerasteten lokalen Oszillator sowie einen Bandpaßfilter.

Bei einem weiteren bevorzugten Ausführungsbeispiel umfasst die Vorrichtung zur Erzeugung des Referenztaktsignals eine Sendeeinrichtung, die ausgelegt ist, um das Referenztakt-Übertragungssignal mit einer Antenne auszustrahlen. Diese Sendeeinrichtung besteht beispielsweise aus einem Sendeverstärker und einem Bandpaß-Ausgangsfilter. Eine solche Anordnung bietet den Vorteil, dass das gesamte System zum Bereitstellen eines drahtlos übertragbaren Referenztakt-Übertragungssignals in einer Einheit zusammengefasst ist.

Die Vorrichtung zum Ableiten eines regenerierten Referenztakts aus einem Referenztakt-Übertragungssignals umfasst gemäß einem bevorzugten Ausführungsbeispiel einen Mischer sowie ein Bandpassfilter zum Erzeugen eines Hilfssignals. Eine solche Anordnung bietet den Vorteil, dass auf technisch einfachem Wege ein Signal erzeugt werden kann, dessen Frequenz gleich der Differenz der Frequenzen der beiden Signale des Referenztakt-Übertragungssignals ist.

Bei einem weiteren bevorzugten Ausführungsbeispiel wird der regenerierte Referenztakt von einem spannungsgesteuerten Kristalloszillator erzeugt, der über eine Phasenregelschleife an das Hilfssignal gekoppelt ist. Dies bringt den Vorteil, dass das Referenztaktsignal die guten spektralen Eigenschaften eines durch einen Kristalloszillator erzeugten Signals hat. Die genaue Frequenz des Kristalloszillators ist dabei ein Vielfaches oder hat ein festes Verhältnis zu der Frequenz des Hilfssignals bzw. des senderseitigen Referenztaktsignals (ggfs. auch einem Vielfachen oder einem Bruchteil davon). Damit hat die Frequenz des regenerierten Referenztaktsignals ein festes, typischerweise gebrochen rationales, Verhältnis zu der Frequenz des senderseitigen Referenzoszillatorsignals.

Bei einem weiteren Ausführungsbeispiel weist die Vorrichtung zum Ableiten des regenerierten Referenztaktes aus dem Referenztakt-Übertragungssignal eine Einrichtung zum Umsetzen des Referenztakt-Übertragungssignals in eine andere Frequenzlage auf. Eine solche Einrichtung zur Frequenzumsetzung kann beispielsweise einen Mischer, einen phasengerasteten Lokaloszillator sowie ein oder mehrere Bandpassfilter und eine oder mehrere Verstärkerstufen umfassen. Ferner kann die Vorrichtung zum Ableiten des regenerierten Referenztaktes aus dem Referenztakt-Übertragungssignal eine Empfangseinrichtung aufweisen, die ausgelegt ist, um das Referenztakt-Übertragungssignal von einer Antenne zu empfangen. Eine solche Anordnung bietet den Vorteil, dass das Referenztakt-Übertragungssignal drahtlos und in jedem beliebigen zugelassenen Frequenzband übertragen werden kann.

Die oben beschriebenen Vorrichtungen realisieren ein Verfahren zur Erzeugung eines Referenztakt-Übertragungssignals sowie ein Verfahren zum Ableiten eines regenerierten Referenztaktes aus einem Referenztaktübertragungssignal. Der Kerngedanke dieses Verfahrens ist die Bereitstellung und Auswertung von zwei Signalen, deren Frequenzen und insbesondere deren Frequenzdifferenz eine vorbestimmte Beziehung zu dem Referenztakt aufweist. Bei der Erzeugung des Referenztakt-Übertragungssignals werden diese beiden Frequenzen kombiniert, beim Ableiten des Referenztakt aus dem Referenztaktübertragungssignal wird ein Hilfssignal, dessen Frequenz gleich der Frequenzdifferenz zwischen den beiden Signalen ist, verwendet. Aus dem Hilfssignal wird dann das Referenztaktsignal abgeleitet. Die beiden Verfahren sind insofern vollkommen analog zu dem eben beschriebenen Vorrichtungen.

Bevorzugte Ausführungsbeispiele der vorliegenden Erfindung werden nachfolgend Bezug nehmend auf die beiliegenden Zeichnungen näher erläutert. Es zeigen:
- Fig. 1: einen Systemplan eines Ausführungsbeispiels eines drahtlosen Lokalisierungssystems;
- Fig. 2: ein Blockschaltbild eines Ausführungsbeispiels einer Vorrichtung zur Erzeugung eines Referenztakt-Übertragungssignals;
- Fig. 3: ein Blockschaltbild eines Ausführungsbeispiels einer Vorrichtung zum Ableiten eines regenerierten Referenztaktes aus einem Referenztakt-Übertragungssignal.

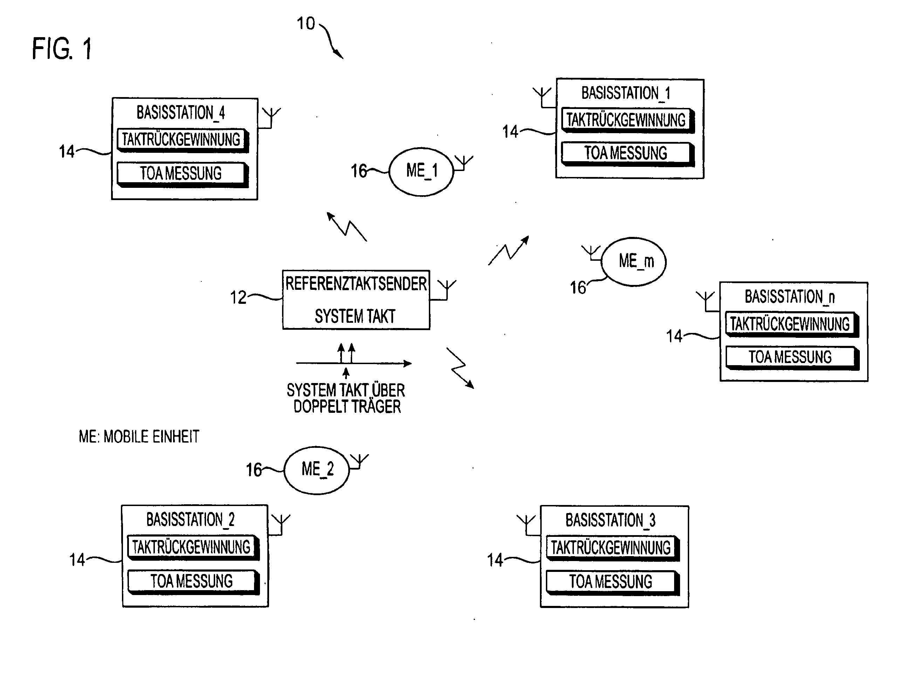

Fig. 1 zeigt bei 10 einen Systemplan eines Ausführungsbeispiels eines drahtlosen Lokalisierungssystems. Das Lokalisierungssystem besteht aus einem Referenztaktsender 12, einigen örtlich verteilten Basisstationen 14 und einigen zu ortenden mobilen Einheiten 16.

Dieses drahtlose Lokalisierungssystem kann sowohl im Innenbereich als auch im Außenbereich eingesetzt werden. Im Referenztaktsender 12 wird ein jitterarmes Taktsignal zentral generiert. Aus dem Referenztakt wird dann ein Referenztakt-Übertragungssignal erzeugt, das aus zwei Pilottönen mit einer wohl definierten Frequenzdifferenz besteht. Dieses Signal wird mit geringer Leistung dauerhaft ausgesendet. Die verteilten Basisstationen 14 gewinnen aus den Pilottönen das regenerierte Referenztaktsignal zur eigenen Synchronisation zurück und wandeln es in ein internes Taktsignal um. Somit werden die Basisstationen mit einem zentralen Taktsignal versorgt, das über Funk verteilt wird, um den Installationsaufwand des Systems zu verringern. Mobile Einheiten senden burst-artig ihren Code und weitere applikationsspezifische Daten. Diese Signale werden in den jeweiligen Basisstationen decodiert, und für jede mobile Einheit werden die Laufzeiten (TOA-Messwerte) in Bezug auf den Systemtakt berechnet. Aus den TOA-Werten der Basisstationen kann die exakte Position der jeweiligen Mobileinheit berechnet werden. Eine Vorkalibrierung berechnet dabei den Zeitversatz der Taktsignale der jeweiligen Basisstationen zueinander.

Das in Fig. 1 dargestellte Lokalisierungssystem ist also ein Ausführungsbeispiel für ein System, bei dem eine präzise und jitterarme drahtlose Übertragung eines Referenztaktsignals für eine ordnungsgemäße Funktion des Systems unerlässlich ist. Eine drahtlose Übertragung des Referenztaktes verringert hierbei den Installationsaufwand des Systems und damit die Kosten deutlich.

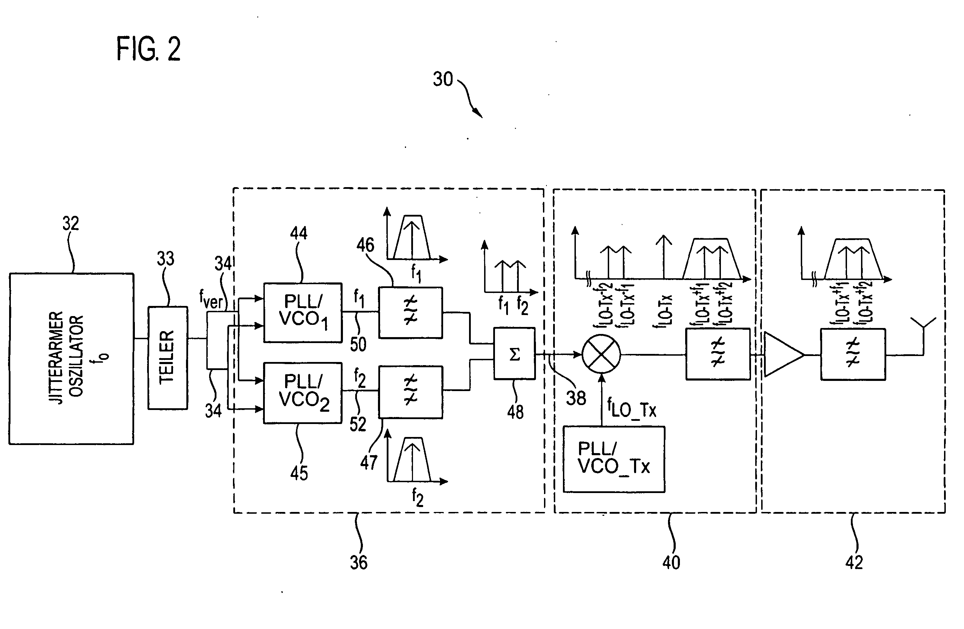

Fig. 2 zeigt bei 30 ein Blockschaltbild eines Ausführungsbeispiels einer Vorrichtung zur Erzeugung eines Referenztakt-Übertragungssignals. Ein jitterarmer Oszillator 32 erzeugt ein Referenzoszillatorsignal. Dieses wird einer Frequenzteilereinrichtung 33 zugeführt, die ein Referenztaktsignal 34 erzeugt, dessen Frequenz ein Bruchteil der Frequenz des Referenzoszillatorsignals ist. Das Referenztaktsignal 34 wird einer Vorrichtung 36 zur Erzeugung eines Referenztakt-Übertragungssignals im Basisband zugeführt. An deren Ausgang steht das Referenztakt-Übertragungssignal im Basisband 38 zur Verfügung. Dieses wird einer Frequenzumsetzer-Einrichtung 40 zugeführt. Das Ausgangssignal dieser Stufe dient als Eingangssignal für eine Sendeeinrichtung 42.

Die Vorrichtung zur Erzeugung eines Referenztakt-Übertragungssignals im Basisband umfasst zwei Phasenregelschleifen 44,45, denen das Referenztaktsignal 34 als Referenzsignal zugeführt wird. Die Phasenregelschleifen umfassen je einen spannungsgesteuerten Oszillator sowie zumeist einen Frequenzteiler. Die Ausgangssignale 50,52 der Phasenregelschleifen werden je einem Bandpassfilter 46,47 zugeführt. Die gefilterten Signale werden dann in einer Summierstufe 48 zum Referenztakt-Übertragungssignal im Basisband 38 kombiniert.

Die Vorrichtung 36 zur Erzeugung eines Referenztakt-Übertragungssignals im Basisband 38 wird im Folgenden näher beschrieben. Das Referenzoszillatorsignal, das durch einen jitterarmen Oszillator 32 erzeugt wird, wird einer Frequenzteilereinrichtung 33 zugeführt, die an ihrem Ausgang ein Referenztaktsignal 34 liefert. Durch diese Anordnung kann ein Referenztaktsignal erzeugt werden, dessen Frequenz deutlich niedriger ist als die Frequenz des Oszillators 32. Dies ist nötig, da frequenzstabile jitterarme Oszillatoren mit Frequenzen im Bereich von 10MHz mit geringem Aufwand realisiert werden können. Andererseits ist es aber vorteilhaft, wenn das Referenztaktsignal eine deutlich niedrigere Frequenz aufweist, beispielsweise im Bereich von 1MHz. Dadurch wird die zur Übertragung des Referenztakts benötigte Bandbreite verringert. Dies wiederum ermöglicht den Einsatz des drahtlosen Referenztaktübertragungssystems in schmalen ISM-Frequenzbändern und stellt weiterhin sicher, dass alle zu übertragenden Trägerfrequenzen den selben Ausbreitungsbedingungen und Störeinflüssen unterliegen. Das Referenztaktsignal wird einer Phasenregelschleife als Eingangssignal zugeführt. Bei geeigneter Ausführung der Phasenregelschleife, insbesondere beim geeigneten Einbau von Frequenzteilern, können mit den beiden Phasenregelschleifen ein erstes Signal 50 mit einer ersten Frequenz f₁ sowie ein zweites Signal 52 mit einer zweiten Frequenz f₂ erzeugt werden, wobei die Frequenzen f₁ und f₂ typischerweise gebrochen rationale Vielfache der Frequenz fᵥₑᵣ des Referenztaktsignals 34 bzw. der Frequenz f₀ des Referenzoszillatorsignals sind. Da die Frequenzen des ersten Signals 50 und des zweiten Signals 52 bekannt sind, können an die Ausgänge der Phasenregelschleifen 44,45 zwei fest konfigurierte Filter 46,47 geschaltet werden. Diese verbessern die spektrale Reinheit des ersten Signals und des zweiten Signals. Die Filter reduzieren damit auch die Anforderungen an die spektrale Reinheit der spannungsgesteuerten Oszillatoren in den Phasenregelschleifen, insbesondere was den Oberwellengehalt anbelangt. Die gefilterten Signale werden dann in einer Summierstufe 48 kombiniert. Am Ausgang der Summierstufe 48 liegt dann das Referenztakt-Übertragungssignal im Basisband 38 an. Dieses umfasst zwei sinusförmige Signale mit den Frequenzen f₁ und f₂, wobei f₁ und f₂ typischerweise gebrochen rationale Vielfache der Frequenz f₀ des Referenztaktsignals 34 sind.

Die erzeugten Signale werden im Weiteren in einer Frequenzumsetzereinrichtung 40 in der Frequenz umgesetzt. Die Frequenzumsetzung erfolgt in einem Mischer unter Verwendung des Ausgangssignals eines geeigneten phasengerasteten lokalen Oszillators. Auch eine geeignete Filterung mit Hilfe eines Bandpassfilters ist nötig. Schließlich wird in einer Sendeeinrichtung 42 das Referenztakt-Übertragungssignal im Radioband verstärkt und drahtlos abgestrahlt.

Bei dem vorliegenden Ausführungsbeispiel ist somit die Vorrichtung 36 zur Erzeugung eines Referenztakt-Übertragungssignals 38 kombiniert mit einer Einrichtung zur Frequenzumsetzung 40 und einer Sendeeinrichtung 42. Diese Kombination ermöglicht eine drahtlose Übertragung des Referenztakt-Übertragungssignals 38 in jedem zugelassenen Frequenzbereich.

Bei einem anderen Ausführungsbeispiel kann die Weiterverarbeitung des Referenztakt-Übertragungssignals im Basisband 38 anders ausgeführt sein. Beispielsweise kann bei geeigneter Auslegung der Phasenregelschleifen und insbesondere der spannungsgesteuerten Oszillatoren hierin die Einrichtung zur Frequenzumsetzung 40 entfallen und somit das Referenztakt-Übertragungssignal im Basisband 38 direkt ausgestrahlt werden. Weiterhin ist es möglich, das Referenztakt-Übertragungssignal mit Hilfe einer Leitung zu übertragen. In diesem Fall kann die Sendeeinrichtung 42 entfallen bzw. durch einen Leitungstreiber ersetzt werden. Die leitungsgebundene Übertragung kann sowohl im Basisband als auch bei einer anderen Grundfrequenz erfolgen. Somit kann bei einer leitungsgebundenen Übertragung die Frequenzumsetzereinrichtung 40 ggf. entfallen.

Bei einem weiteren Ausführungsbeispiel kann die Erzeugung des Referenztaktes 34 anderweitig realisiert sein. Insbesondere ist es möglich, dass das Referenztaktsignal von einer Referenztaktsignalquelle erzeugt wird, die mit einem extern zugeführten Referenzsignal synchronisiert ist. Die Synchronisation kann dabei beispielsweise durch das DCF77-Signal oder durch ein GPS-Signal erfolgen. Auch eine Synchronisation über ein Datennetzwerk ist möglich.

Die Erzeugung des ersten Signals 50 und des zweiten Signals 52 aus dem Referenztaktsignal 34, die in dem vorliegenden Ausführungsbeispiel mit Hilfe von Phasenregelschleifen erzielt wird, kann anderweitig erfolgen, solange gewährleistet ist, dass die Differenzfrequenz zwischen dem ersten Signal 50 und dem zweiten Signal 52 in einem wohl definierten Verhältnis zu der Frequenz des Referenztaktsignals 34 steht. Beispielsweise ist es möglich, anstelle der Phasenregelschleifen Frequenzvervielfacher, ggf. auch Frequenzteiler, zu verwenden.

Bei einem weiteren Ausführungsbeispiel können die Filter 46 und 47, die den Phasenregelschleifen 44, 45 nachgeschaltet sind, entfallen, so lange eine ausreichende spektrale Reinheit des Referenztakt-Übertragungssignals im Basisband 38 gewährleistet ist.

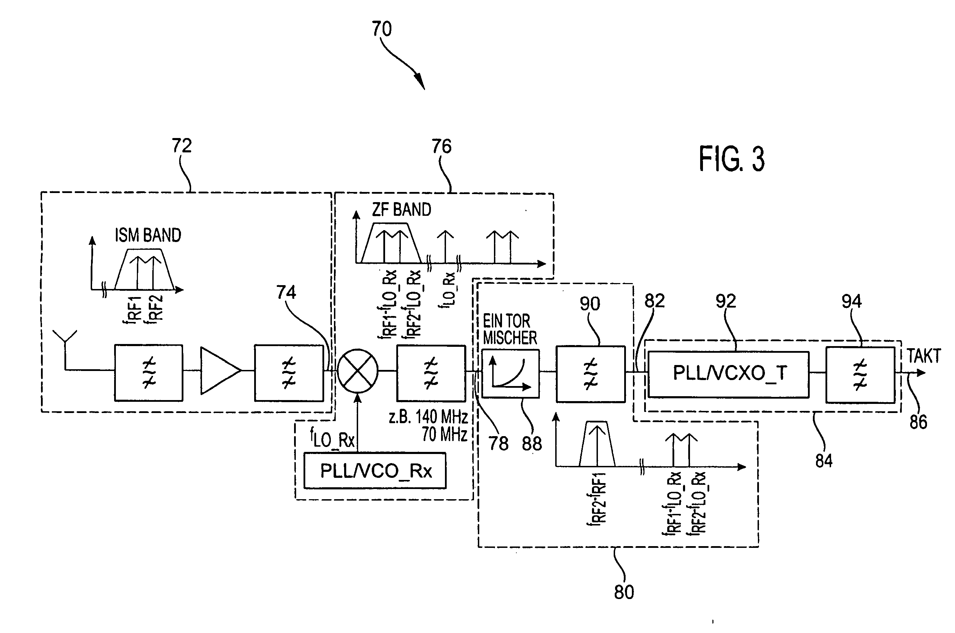

Fig. 3 zeigt bei 70 ein Blockschaltbild eines Ausführungsbeispiels einer Vorrichtung zum Ableiten eines regenerierten Referenztakts aus einem Referenztakt-Übertragungssignal. Die Vorrichtung umfasst ein Hochfrequenzeingangsteil 72, das an seinem Ausgang ein gefiltertes und verstärktes Referenztakt-Übertragungssignal im Radio-Band 74 liefert. Dieses wird einer Frequenzumsetzereinrichtung 76 zugeführt. Am Ausgang der Frequenzumsetzereinrichtung 76 steht das Referenztakt-Übertragungssignal in Zwischenfrequenz-Band 78 zur Verfügung. Dieses Signal wird einer Einrichtung 80 zur Erzeugung eines Hilfssignals 82 zugeführt, wobei das Hilfssignal ein Sinussignal ist, dessen Frequenz gleich der Frequenzdifferenz der beiden in dem Referenztakt-Übertragungssignal enthaltenen Frequenzen ist. Mit dem Hilfssignal 82 wird ein Referenztaktgenerator 84 synchronisiert, der an seinem Ausgang ein regeneriertes Referenztaktsignal 86 zur Verfügung stellt.

Im folgenden wird die Funktionsweise der in Fig. 3 gezeigten Vorrichtung im Detail erläutert. Das Referenztakt-Übertragungssignal im Zwischenfrequenz-Band wird dabei von einem Empfangsteil bereitgestellt, das im wesentlichen ein Hochfrequenz-Eingangsteil 72 und eine Frequenzumsetzereinrichtung 76 umfasst. Dabei wird das drahtlos übertragene Referenztakt-Übertragungssignal im Radioband 74 erst verstärkt und dann in ein Zwischenfrequenzband umgesetzt. Zur Regenerierung des Referenztaktsignals werden die beiden in dem Zwischenfrequenzsignal 78 enthaltenen Träger (Pilottöne) in einem stark nicht-linearen Element miteinander gemischt. In dem vorliegenden Ausführungsbeispiel ist dieses stark nicht lineare Element ein Eintormischer 88. Dabei entsteht ein neues Signal, dessen Frequenz gleich der Frequenzdifferenz der beiden Trägersignale ist. Die Frequenz dieses Signals ist bekannt und konstant. Daher kann das Signal mit der Differenzfrequenz der beiden Trägersignale durch einen sehr schmalbandigen Filter 90 extrahiert werden. Weil der Filter eine feste Durchlassfrequenz hat, kann ein sehr schmalbandiger Filter 90 hoher Güte verwendet werden. Durch die hohe Selektivität des Filters kann sehr viel Grundrauschen unterdrückt werden, wodurch der Jitter verringert wird. Es entsteht ein Hilfssignal 82. Dieses Signal ist ggf. noch nicht geeignet für eine Anwendung als Referenztaktsignal, da in vielen Fällen ein regeneriertes Referenztaktsignal benötigt wird, das eine andere Frequenz als das Hilfstaktsignal aufweist. Es müssen nämlich die beiden über die Funkstrecke übertragenen Signale sehr nahe beieinanderliegende Frequenzen haben, damit die beiden Signale den gleichen Einflüssen auf einem frequenzselektiven und gestörten Übertragungskanal unterliegen. Außerdem ist die verfügbare Bandbreite in den meisten zugelassenen Frequenzbereichen sehr gering. Das regenerierte Referenztaktsignal sollte aber meist eine hohe Frequenz aufweisen, die größer ist als die maximal zulässige Frequenzdifferenz zwischen den beiden drahtlos übertragenen Trägern. Ein hochfrequentes regeneriertes Referenztaktsignal erlaubt beispielsweise eine hohe Zeitauflösung in einem Funkortungssystem. Um dies zu erreichen, kann unter Verwendung einer Phasenregelschleife in Verbindung mit einem an sich schon stabilen Oszillator und einem Frequenzteiler ein in einem großen Frequenzbereich wählbares regeneriertes Referenztaktsignal erzeugt werden. Ein Referenztaktsignal 86 mit verbesserter Signalqualität insbesondere in Bezug auf Jitter und Kurzzeitstabilität kann ebenfalls durch eine Phasenregelschleife 92, die einen spannungsgesteuerten Oszillator und ein schmalbandiges Schleifenfilter umfasst, erzeugt werden. In dem vorliegenden Ausführungsbeispiel wird als spannungsgesteuerter Oszillator ein spannungsgesteuerter Kristalloszillator VCXO verwendet. Dieser kann in seiner Oszillatorfrequenz nur geringfügig verändert werden, liefert jedoch ein spektral sehr sauberes Ausgangssignal. Der geringe Variationsbereich bezüglich der Oszillatorfrequenz ist ausreichend, da die Oszillatorfrequenz von vorne herein mit sehr guter Genauigkeit bekannt ist, und der Oszillator lediglich exakt auf das Hilfssignal synchronisiert, d.h. nur sehr fein verstimmt, werden muss. Ein zusätzliches Bandpassfilter 94, das dem Ausgang der Phasenregelschleife nachgeschaltet ist, verbessert zusätzlich die Qualität des regenerierten Referenztaktsignals 86, indem es insbesondere Oberwellenanteile unterdrückt.

Gemäß einem weiteren Ausführungsbeispiel kann die Frequenzumsetzereinrichtung 76 zur Umsetzung des Referenztakt-Übertragungssignals im Radio-Band 74 in das Referenztakt-Übertragungssignal im Zwischenfrequenzband 78 entfallen. Dies ist möglich, falls das Referenztakt-Übertragungssignal im Radio-Band schon im Hochfrequenz-Eingangsteil 72 hinreichend gut aus dem Spektrum der empfangenen Signale ausgefiltert werden kann. Dies bringt den Vorteil, dass die Frequenzumsetzerstufe 76 eingespart werden kann.

Bei einem weiteren Ausführungsbeispiel kann das Referenztakt-Übertragungssignal drahtgebunden übertragen werden. In diesem Falle kann die Hochfrequenz-Eingangsstufe 72 entfallen bzw. durch einen Leitungsempfänger ersetzt werden. Die Frequenzumsetzereinrichtung 76 kann bei der leitungsgebundenen Übertragung ebenfalls entfallen, falls eine Übertragung im ZF-Band erfolgt.

Bei einem weiteren Ausführungsbeispiel kann das Hilfssignal 82 direkt als regeneriertes Referenztaktsignal 86 verwendet werden. Dies ist möglich, wenn nicht allzu hohe Anforderungen an die Signalqualität des regenerierten Referenztaktsignals 86 gestellt werden. Die Phasenregelschleife 92 und das Ausgangsfilter 94 können in diesem Fall entfallen. Dies führt zu einer weiteren Vereinfachung der Vorrichtung.

Bei einem weiteren Ausführungsbeispiel kann ein anderes nicht-lineares Element zur Erzeugung eines Hilfssignals 82, dessen Frequenz gleich der Frequenzdifferenz der beiden Pilottöne ist, verwendet werden. Insbesondere kann der Eintormischer 88 durch einen Zweitormischer oder ein anderes nicht-lineares Element ersetzt werden.

Bei einem Ausführungsbeispiel beträgt die Frequenz des Referenzoszillatorsignals 10MHz. Das Referenzoszillatorsignal wird dann durch eine Frequenzteilereinrichtung durch 10 geteilt, so dass ein Referenztakt mit einer Frequenz von 1MHz entsteht. Daraus werden zwei Signale mit den Frequenzen 140MHz und 141Mhz abgeleitet. Die Übertragung dieser beiden Signale erfolgt dann im 2.4GHz ISM-Band, was durch eine Frequenzumsetzung ermöglicht wird. Empfängerseitig wird aus den beiden Signalen die Differenzfrequenz von 1MHz zurückgewonnen. Damit wird ein Oszillator mit einer Sollfrequenz von 200MHz über eine Phasenregelschleife synchronisiert.

Die vorliegende Erfindung schafft also eine Vorrichtung zur Erzeugung eines Referenztakt-Übertragungssignals, aus dem ein Referenztakt ableitbar ist, sowie eine Vorrichtung zum Ableiten eines regenerierten Referenztakts aus einem Referenztakt-Übertragungssignal sowie zugehörige Verfahren zum Erzeugen eines Referenztakt-Übertragungssignals und zum Ableiten eines Referenztakts aus demselben. Die Vorrichtungen können zu einem Referenztakt-Übertragungssystems kombiniert werden, das insbesondere bei drahtloser Übertragung des Referenztaktes Vorteile gegenüber herkömmlichen Systemen gemäß dem Stand der Technik bietet.

## Patentansprüche

1. Vorrichtung zum Ableiten eines regenerierten Referenztakts (86) aus einem Referenztakt-Übertragungssignal (74), das ein erstes Signal mit einer ersten Frequenz und ein zweites Signal mit einer zweiten Frequenz umfasst, wobei eine Differenz zwischen der ersten Frequenz und der zweiten Frequenz eine vorbestimmte Beziehung zu der Frequenz des Referenztakts (34) aufweist, mit folgenden Merkmalen:
einer Einrichtung (80) zum Erzeugen eines Hilfssignals (82), dessen Frequenz gleich der Differenz zwischen der ersten Frequenz und der zweiten Frequenz des Referenztakt-Übertragungssignals ist; und
einer Einrichtung (84) zum Ableiten des regenerierten Referenztakts (86) von dem Hilfssignal (82),
wobei die Einrichtung zum Ableiten des regenerierten Referenztaktes von dem Hilfssignal eine Phasenregelschleife (92), die einen spannungsgesteuerten Kristalloszillator (VCXO) und einen Frequenzteiler umfasst, aufweist, um den regenerierten Referenztakt (86) aus dem Hilfssignal (82) abzuleiten, indem der spannungsgesteuerte Kristalloszillator auf das Hilfssignal synchronisiert wird,
wobei der regenerierte Referenztakt eine Frequenz aufweist, die größer als die Differenz zwischen der ersten Frequenz und der zweiten Frequenz ist.

2. Vorrichtung gemäß Anspruch 1, die einen Mischer (88) zum Erzeugen des Hilfssignals aufweist.

3. Vorrichtung gemäß Anspruch 1 oder 2, die eine Einrichtung (76) zum Umsetzen des Referenztakt-Übertragungssignals (74) in eine andere Frequenzlage aufweist.

4. Vorrichtung gemäß Anspruch 3, bei der die Einrichtung (76) zur Frequenzumsetzung einen Mischer, einen phasengerasteten lokalen Oszillator sowie ein oder mehrere Bandpassfilter und eine oder mehrere Verstärkerstufen umfasst.

5. Vorrichtung gemäß einem der Ansprüche 1 bis 4, die eine Empfangseinrichtung (72) aufweist, die ausgelegt ist, um das Referenztakt-Übertragungssignal (74) von einer Antenne zu empfangen.

6. Verfahren zum Ableiten eines regenerierten Referenztakts aus einem Referenztakt-Übertragungssignal, das ein erstes Signal mit einer ersten Frequenz und ein zweites Signal mit einer zweiten Frequenz umfasst, wobei eine Differenz zwischen der ersten Frequenz und der zweiten Frequenz eine vorbestimmte Beziehung zu dem Referenztakt aufweist, mit folgenden Schritten:
Erzeugen eines Hilfssignals, dessen Frequenz gleich der Differenz zwischen der ersten Frequenz und der zweiten Frequenz des Referenztakt-Übertragungssignals ist;
Ableiten des regenerierten Referenztakts von dem Hilfssignal,
wobei der Schritt des Ableitens des regenerierten Referenztaktes von dem Hilfssignal unter Verwendung einer Phasenregelschleife (92), die einen spannungsgesteuerten Kristalloszillator (VCXO) und einen Frequenzteiler umfasst, erfolgt, und der spannungsgesteuerte Kristalloszillator auf das Hilfssignal synchronisiert wird,
wobei der regenerierte Referenztakt eine Frequenz aufweist, die größer als die Differenz zwischen der ersten Frequenz und der zweiten Frequenz ist.

7. Basisstation (14), mit folgenden Merkmalen:
einer Vorrichtung zum Ableiten eines regenerierten Referenztakts (86) aus einem Referenztakt-Übertragungssignal (74), das ein erstes Signal mit einer ersten Frequenz und ein zweites Signal mit einer zweiten Frequenz umfasst, wobei eine Differenz zwischen der ersten Frequenz und der zweiten Frequenz eine vorbestimmte Beziehung zu der Frequenz des Referenztakts (34) aufweist, gemäß einem der Ansprüche 1 bis 5,
wobei die Vorrichtung zum Ableiten ausgelegt ist, um den regenerierten Referenztakt in ein internes Taktsignal umzuwandeln.

8. Basisstation (14) gemäß Anspruch 7, die ferner eine Einrichtung zur Bestimmung von Signallaufzeiten in Bezug auf einen Systemtakt aufweist.

## Claims

1. An apparatus for deriving a regenerated reference clock (86) from a reference-clock transmission signal (74) comprising a first signal having a first frequency and a second signal having a second frequency, the difference between the first frequency and the second frequency having a predetermined relationship to the frequency of the reference clock (34), the apparatus comprising:
means (80) for generating an auxiliary signal (82), the frequency of which equals the difference between the first frequency and the second frequency of the reference-clock transmission signal; and
means (84) for deriving the regenerated reference clock (86) from the auxiliary signal (82),
wherein the means for deriving the regenerated reference clock from the auxiliary signal comprises a phase-locked loop (92) having a voltage-controlled crystal oscillator (VCXO) and a frequency divider so as to derive the regenerated reference clock (86) from the auxiliary signal (82) in that the voltage-controlled crystal oscillator is synchronized to the auxiliary signal,
wherein the regenerated reference clock comprises a frequency larger than the difference between the first frequency and the second frequency.

2. The apparatus as claimed in claim 1, comprising a mixer (88) for generating the auxiliary signal.

3. The apparatus as claimed in claim 1 or 2, comprising means (76) for converting the reference-clock transmission signal (74) to a different frequency position.

4. The apparatus as claimed in claim 3, wherein the means (76) for frequency conversion comprises a mixer, a phase-locked local oscillator as well as one or more band-pass filters and one or more amplifier stages.

5. The apparatus as claimed in any of claims 1 to 4, comprising receive means (72) adapted to receive the reference-clock transmission signal (74) from an antenna.

6. A method of deriving a regenerated reference clock from a reference-clock transmission signal which comprises a first signal having a first frequency and a second signal having a second frequency, a difference between the first frequency and the second frequency having a predetermined relation to the reference clock, the method comprising:
generating an auxiliary signal, the frequency of which equals the difference between the first frequency and the second frequency of the reference-clock transmission signal;
deriving the regenerated reference clock from the auxiliary signal,
wherein the step of deriving the regenerated reference clock from the auxiliary signal is performed while using a phase-locked loop (92) comprising a voltage-controlled crystal oscillator (VCXO) and a frequency divider, and wherein the voltage-controlled crystal oscillator is synchronized to the auxiliary signal,
wherein the regenerated reference clock comprises a frequency larger than the difference between the first frequency and the second frequency.

7. A base station (14) comprising:
an apparatus for deriving a regenerated reference clock (86) from a reference-clock transmission signal (74) comprising a first signal having a first frequency and a second signal having a second frequency, the difference between the first frequency and the second frequency having a predetermined relation to the frequency of the reference clock (34), as claimed in any of claims I to 5,
wherein the apparatus for deriving is adapted to convert the regenerated reference clock to an internal clock signal.

8. The base station (14) as claimed in claim 7, further comprising means for determining signal delay times in relation to a system clock.

## Revendications

1. Dispositif pour dériver une horloge de référence régénérée (86) d'un signal de transmission d'horloge de référence (74) comportant un premier signal avec une première fréquence et un deuxième signal avec une deuxième fréquence, une différence entre la première fréquence et la deuxième fréquence présentant un rapport prédéterminé avec la fréquence de l'horloge de référence (34), aux caractéristiques suivantes:
un moyen (80) pour générer un signal auxiliaire (82) dont la fréquence est égale à la différence entre la première fréquence et la deuxième fréquence du signal de transmission d'horloge de référence; et
un moyen (84) pour dériver l'horloge de référence régénérée (86) du signal auxiliaire (82),
le moyen pour dériver l'horloge de référence régénérée du signal auxiliaire présentant une boucle de réglage de phase (92) comprenant un cristal oscillateur contrôlé par la tension (VCXO) et un diviseur de fréquence, pour dériver l'horloge de référence régénérée (86) du signal auxiliaire (82) en synchronisant le cristal oscillateur contrôlé par la tension sur le signal auxiliaire,
l'horloge de référence régénérée présentant une fréquence qui est supérieure à la différence entre la première fréquence et la deuxième fréquence.

2. Dispositif selon la revendication 1, présentant un mélangeur (88) destiné à générer le signal auxiliaire.

3. Dispositif selon la revendication 1 ou 2, présentant un moyen (76) pour convertir le signal de transmission d'horloge de référence (74) en une autre position de fréquence.

4. Dispositif selon la revendication 3, dans lequel le moyen (76) destiné à la conversion en fréquence comporte un mélangeur, un oscillateur local à phase verrouillée ainsi qu'un ou plusieurs filtres passe-bande et un ou plusieurs étages amplificateurs.

5. Dispositif selon l'une des revendications 1 à 4, présentant un moyen de réception (72) qui est réalisé de manière à recevoir le signal de transmission d'horloge de référence (74) d'une antenne.

6. Procédé pour dériver une horloge de référence régénérée d'un signal de transmission d'horloge de référence comportant un premier signal avec une première fréquence et un deuxième signal avec une deuxième fréquence, une différence entre la première fréquence et la deuxième fréquence présentant un rapport prédéterminé avec l'horloge de référence, aux étapes suivantes consistant à:
générer un signal auxiliaire dont la fréquence est égale à la différence entre la première fréquence et la deuxième fréquence du signal de transmission d'horloge de référence;
dériver l'horloge de référence régénérée du signal auxiliaire,
l'étape de dérivation de l'horloge de référence régénérée du signal auxiliaire ayant lieu à l'aide d'une boucle de réglage de phase (92) comprenant un cristal oscillateur contrôlé par la tension (VCXO) et un diviseur de fréquence, et le cristal oscillateur contrôlé par la tension étant synchronisé sur le signal auxiliaire,
l'horloge de référence régénérée présentant une fréquence qui est supérieure à la différence entre la première fréquence et la deuxième fréquence.

7. Station de base (14), aux caractéristiques suivantes:
un dispositif pour dériver une horloge de référence régénérée (86) d'un signal de transmission d'horloge de référence (74) comportant un premier signal avec une première fréquence et un deuxième signal avec une deuxième fréquence, une différence entre la première fréquence et la deuxième fréquence présentant un rapport prédéterminé avec la fréquence de l'horloge de référence (34), selon l'une des revendications 1 à 5,
le dispositif pour dériver étant réalisé de manière à convertir l'horloge de référence régénérée en un signal d'horloge interne.

8. Station de base (14) selon la revendication 7, présentant par ailleurs un moyen pour déterminer des temps de propagation de signal par rapport à une horloge de système.
